# EUROPÄISCHE PATENTSCHRIFT

(11) **EP 2 451 288 B1**
(45) Veröffentlichungstag und Bekanntmachung des Hinweises auf die Patenterteilung: **28.10.2015**
(21) Anmeldenummer: 10732908.8
(22) Anmeldetag: 05.07.2010
(51) Int. Cl.: A21C 9/08

(54) **VORRICHTUNG ZUR TEIGBANDFUEHRUNG**
DEVICE FOR GUIDING A DOUGH WEB
DISPOSITIF DE GUIDAGE DE PÂTE

(30) Priorität: 07.07.2009 AT 10652009
(43) Veröffentlichungstag der Anmeldung: 16.05.2012
(73) Patentinhaber: König Maschinen Gesellschaft mbH, 8045 Graz (AT)
(72) Erfinder: GASSER, Klaus, A-8047 Graz (AT)
(74) Vertreter: Margotti, Herwig Franz
(86) Internationale Anmeldenummer: PCT/EP2010/059581
(87) Internationale Veröffentlichungsnummer: WO 2011/003878

(56) Entgegenhaltungen:
- EP-A2- 1 920 658
- WO-A1-01/47793
- WO-A1-99/57045
- JP-A- 2001 095 468
- US-A1- 2004 009 253

## Beschreibung

Die Erfindung betrifft eine Vorrichtung zum kontinuierlichen Transport eines Teigstrangs, umfassend ein Förderelement mit einer in Transportrichtung bewegbaren Auflagefläche für den Teigstrang.

Die EP 1920658 A2 offenbart eine Vorrichtung zum Kontinuierlichen Transport eines Teigstrangs gemäß dem Oberbegriff des Anspruchs 1.

In EP 0 438 923 B1 wird ein Verfahren zum kontinuierlichen Zusammendrücken einer Teigmasse zu einer Teigbahn mit einem gleichmäßigen Querschnitt beschrieben. Dabei ist stromaufwärts von einer Zusammendrückeinrichtung ein Zuführförderband mit einer verstellbaren Transportgeschwindigkeit vorgesehen, das die Teigmasse in die Zusammendrückeinrichtung fördert. Stromabwärts davon ist ein Abgabeförderband zum Abtransport der zusammengedrückten Teigbahn angeordnet. An jener Stelle, an der die Teigmasse zusammengedrückt wird, wird die Teigbreite mittels einer Teigbreitenmesseinrichtung erfasst. Anhand der Messwerte der Teigbreite kann die Geschwindigkeit des Zuführförderbands relativ zur Geschwindigkeit des Abgabeförderbands verstellt werden. Somit wird eine kontinuierliche Teigbahn mit gleichmäßigem Querschnitt mit konstanter Geschwindigkeit hergestellt.

Eine Möglichkeit, die kontinuierliche Teigbahn derart zu justieren, dass diese die Zusammendrückeinrichtung immer mittig des Abgabeförderbands verlässt, ist in EP 0 438 923 B1 allerdings nicht vorgesehen. Somit kann es erforderlich sein, bei einer Teigbahn, die die Einrichtung außerhalb der Mitte des Abgabeförderbands verlässt, einen Randbeschnitt durchführen zu müssen, um zu verhindern, dass die Teigbahn seitlich über den Rand des Abgabeförderbands hinaus ragt. Die Folgen sind zumindest unerwünschte Teigverluste und damit verbunden jedenfalls erhöhte Herstellungskosten. Außerdem kann es bei einer stark randgängigen Teigbahn erforderlich sein, die kontinuierliche Produktion unterbrechen zu müssen, um die Teigbahn wieder in ihrer Ausgangslage mittig des Abgabeförderbands anzuordnen.

Um diese Nachteile zu überwinden, wird in DE 600 20 711 T2 eine Vorrichtung zum kontinuierlichen Transportieren von Lebensmittelteig vorgeschlagen, die mit einer Teigschiebevorrichtung umfassend eine Zentrierwalze, eine Kurbelachse sowie einen Stellantrieb, ausgestattet ist. Diese Teigschiebevorrichtung, die am stromabwärtigen Ende einer Fördereinrichtung angeordnet ist, bewegt die Fördereinrichtung mit dem darauf befindlichen Teigstrang, basierend auf den Signalen, die eine Rechenvorrichtung von Breitensensoren an beiden Rändern der Fördereinrichtung erhält, an seinem stromabwärtigen Ende relativ nach links und rechts. Die Fördereinrichtung wird im Bereich der Teigschiebevorrichtung durch zahlreiche nebeneinander angeordnete Einzelseile gebildet, die jeweils in Kerben einer Stützrolle laufen und von dieser gemeinsam angetrieben werden. Je nach Ausführungsvariante kann die Stützrolle mit den Kerben stromaufwärts oder stromabwärts von der Zentrierwalze der Teigschiebevorrichtung angeordnet sein. Die Achsen der Zentrierwalze und der Stützrolle sind zueinander parallel angeordnet. Die Zentrierwalze wird durch eine innen liegende Kurbelachse in axialer Richtung angetrieben, um den Teig nach rechts oder links zu verschieben. Die Kurbelachse ist mit einem äußeren Gewinde ausgestattet. In einem starren Rahmen, der beidseitig der Kurbelachse angeordnet ist und diese unterstützt, ist jeweils ein inneres Gewinde vorgesehen, sodass die Kurbelachse mit ihrem äußeren Gewinde in das Innengewinde eingreift. Die Kurbelachse wiederum ist mit einem Motorantrieb versehen. Somit kann die mit der Kurbelachse bewegungsmäßig gekoppelte Zentrierwalze in axialer Richtung innerhalb des Rahmens hin- und her bewegt werden.

Nachteilig an dieser Ausführung ist, dass von der Teigschiebevorrichtung der Verlauf des Teigstrangs um eine Mittelachse nur in einem kurzen, unmittelbar am stromabwärtigen Ende der Fördereinrichtung gelegenen Bahnabschnitt justiert wird. Somit wird zur Bahnjustierung nicht die gesamte, zur Verfügung stehende Länge der Fördereinrichtung genutzt. Aufgrund der unmittelbaren seitlichen Verschiebung wird der Teigstrang somit erhöhten Zug- bzw. Schubspannungen ausgesetzt, die sich möglicherweise nachteilig auf die Qualität des Teiges auswirken. Eine schonende Justierung des Teigstrangs um seine Mittelachse ist in dieser Ausführung somit nicht möglich.

Damit entlang des kurzen Abschnitts am stromabwärtigen Ende der Fördereinrichtung überhaupt eine seitliche Verschiebung des Teigstrangs bewerkstelligt werden kann, wird die Fördereinrichtung in diesem Abschnitt anstelle des sonst üblichen, über die gesamte Bahnbreite flächig durchgehenden Förderbands durch zahlreiche flexible Einzelseile gebildet, die voneinander in Längsrichtung beabstandet sind. Sehr weiche Teige können von einer derartigen, aus Einzelseilen gebildeten Fördereinrichtung, die den Teigstrang nur linienweise unterstützt, gar nicht befördert werden, was einen weiteren Nachteil dieser Ausführung darstellt.

Es ist somit die Aufgabe der vorliegenden Erfindung, eine Vorrichtung zum kontinuierlichen Transport eines Teigstrangs bereitzustellen, die die geschilderten Nachteile des Stands der Technik vermeidet.

Diese Aufgabe wird bei einer Vorrichtung gemäß dem Oberbegriff des Anspruches 1 mit den Merkmalen des kennzeichnenden Teiles des Anspruchs 1 gelöst. Die Unteransprüche betreffen weitere vorteilhafte Ausgestaltungen der Erfindung.

Besonders vorteilhaft ist bei einer erfindungsgemäßen Vorrichtung zum kontinuierlichen Transport eines Teigstrangs, umfassend ein Förderelement mit einer in Transportrichtung bewegbaren Auflagefläche für den Teigstrang, das Förderelement um eine Schwenkachse, die an seinem stromabwärtigen Endbereich angeordnet ist, im Wesentlichen quer zur Transportrichtung verschwenkbar. Somit kann der Übergabeabschnitt, in dem der Teigstrang auf der Auflagefläche des Förderelements angelegt wird, durch Verschwenken so angepasst werden, dass der Teigstrang mittig der Breite der Auflagefläche zu liegen kommt.

Als Teigstrang werden sowohl durchgehende Teigbahnen, als auch einzelne Teigabschnitte, die voneinander beabstandet am Förderelement angelegt sind, bezeichnet. Auch Bahnen bzw. Abschnitte von vorgefertigten Teigen sind von dieser Bezeichnung umfasst.

Zweckmäßig ist bei einer erfindungsgemäßen Vorrichtung die Schwenkachse des Förderelements mittig seiner Breite angeordnet. Somit liegt die Schwenkachse in der Symmetrieebene in Mittellage längs des Förderelements.

In einer bevorzugten Ausführungsform der Erfindung ist die Vorrichtung dadurch gekennzeichnet, dass die Schwenkachse senkrecht zur Auflagefläche des Förderelements steht. Somit können erforderlichenfalls auch Niveauunterschiede durch das Förderelement ausgeglichen werden und das verschwenkbare Förderelement muss nicht waagrecht angeordnet sein.

Gemäß einem weiteren Merkmal der Erfindung ist das Förderelement der Vorrichtung als Förderband ausgeführt.

Vorteilhafterweise ist bei einer erfindungsgemäßen Vorrichtung zum Verschwenken des Förderelements ein Verschwenkantrieb vorgesehen, der vorzugsweise am stromaufwärtigen Ende des Förderelements angeordnet ist. Der Verschwenkantrieb kann auch an anderen Stellen an dem Förderelement bzw. an seinem Rahmen befestigt sein.

Eine weitere zweckmäßige Ausführungsform der erfindungsgemäßen Vorrichtung ist dadurch gekennzeichnet, dass das stromaufwärtige Ende des Förderelements aus seiner Mittellage beidseitig jeweils bis zu 25%, vorzugsweise jeweils bis zu 10% der Breite des Teigstrangs quer zur Transportrichtung ausschwenkbar ist. Mit dieser Auslenkung können Abweichungen des Teigstrangs, der beispielsweise auf einem Förderband einer vorhergehenden Übergabevorrichtung schräg oder außerhalb der Mittellage aufgelegt ist, ausgeglichen werden.

In einer weiteren Ausführungsform zur Lösung der erfindungsgemäßen Aufgabe ist eine Vorrichtung dadurch gekennzeichnet, dass eine Übergabevorrichtung, ausgebildet zur Übergabe des Teigstrangs in einem Abschnitt an die Auflagefläche des Förderelements sowie vorzugsweise ein Förderband umfassend, vorgesehen ist.

Zweckmäßig ist bei einer erfindungsgemäßen Vorrichtung die Übergabevorrichtung stromaufwärts des Förderelements vorgesehen, wobei das Förderband in Transportrichtung des Förderelements fördert.

In einer Variante der erfindungsgemäßen Vorrichtung ist die Übergabevorrichtung oberhalb des Förderelements positioniert, wobei das Förderband entgegen der Transportrichtung des Förderelements fördert.

Vorteilhaft umfasst eine erfindungsgemäße Vorrichtung eine Steuereinheit sowie Sensoren zur Erfassung der Position von beiden Rändern des Teigstrangs, wobei die Steuereinheit anhand der Signale der Sensoren den Verschwenkantrieb so regelt, dass der Teigstrang im Übergabeabschnitt des Förderelements mittig seiner Breite aufgelegt wird. Abweichungen der Lage des Teigstrangs, der auf dem Förderband der Übergabevorrichtung beispielsweise schräg bzw. außerhalb der Mittellage aufgelegt sein kann, werden somit ausgeglichen.

Zweckmäßig sind bei einer erfindungsgemäßen Vorrichtung die Sensoren zur Erfassung der Position von beiden Rändern des Teigstrangs an der Übergabevorrichtung angeordnet. Ein frühzeitiges Justieren des erfindungsgemäßen schwenkbaren Förderelements ist somit möglich.

In einer besonders vorteilhaften Ausführung sind bei einer Vorrichtung die Sensoren zur Erfassung der Position der Teigränder fotoelektrische Sensoren sind.

In einer Ausführungsvariante einer erfindungsgemäßen Vorrichtung sind die Sensoren zur Erfassung der Position der Teigränder Ultraschall-Sensoren. Auch andere Ausführungsformen von Sensoren zur Erfassung der Position der Teigränder sind denkbar. Weitere Merkmale der Erfindung ergeben sich aus der nachfolgenden Beschreibung von Ausführungsbeispielen und unter Bezugnahme auf die Zeichnung.

Es zeigen:
- Fig. 1 eine schematische Seitenansicht einer erfindungsgemäßen Vorrichtung.
- Fig. 2 eine schematische Draufsicht einer erfindungsgemäßen Vorrichtung.

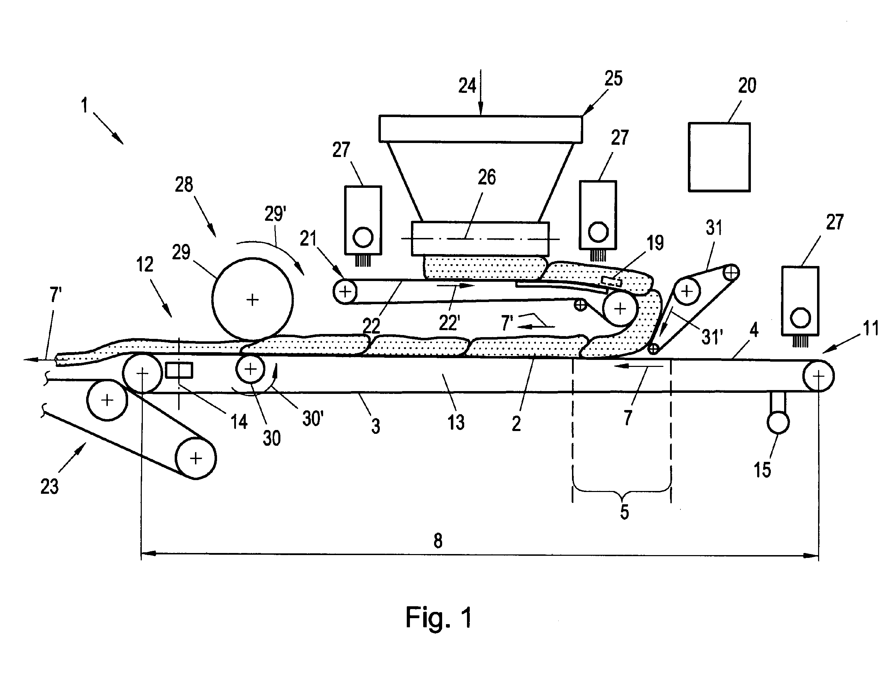

Fig. 1 zeigt in einer Seitenansicht eine Ausführung einer erfindungsgemäßen Vorrichtung 1 zum kontinuierlichen Transport eines Teigstrangs 2. Die Vorrichtung 1 umfasst ein Förderelement 3, an dessen Auflagefläche 4 der Teigstrang 2 in einem Übergabeabschnitt 5 aufgelegt wird. Das Förderelement 3, hier als flächig durchgehendes Förderband ausgeführt, ist mit einem Antrieb 6 versehen, der das Förderelement 3 so antreibt, dass sich seine Auflagefläche 4 in Transportrichtung 7 mit derselben Geschwindigkeit wie der Teigstrang 2 auf der vorhergehenden Übergabevorrichtung 21 bzw. der nachfolgenden Abgabevorrichtung 22 bewegt.

Das Förderelement 3 ist als Förderband ausgeführt und weist eine Länge 8 und eine Breite 9 auf, wobei die Breite 9 größer als die Breite 10 des Teigstrangs 2 ist. Der Rahmen 13 des Förderelements 3 reicht von seinem in Transportrichtung 7 gesehen stromaufwärtigen Ende 11 bis zu seinem stromabwärtigen Ende 12. Am Rahmen 13 ist auch der Antrieb 6 des Förderelements 3 befestigt.

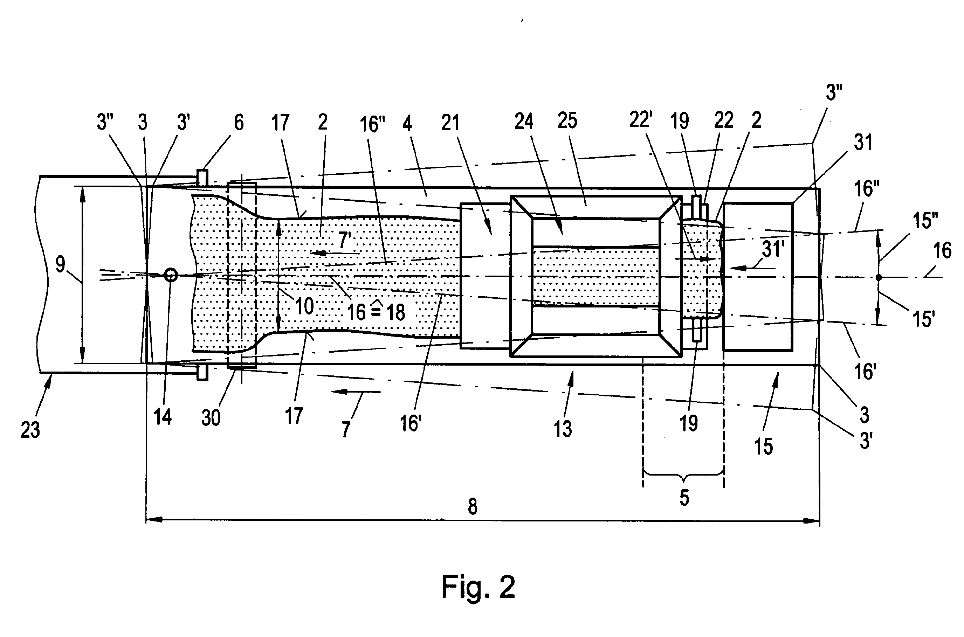

Der Rahmen 13 ist um eine Schwenkachse 14 drehbar angeordnet, wobei die Schwenkachse 14 senkrecht zur Auflagefläche 4 steht. Die Schwenkachse 14 ist in einem stromabwärts gelegenen Endbereich 12 angeordnet. Wie in Fig. 2 dargestellt ist die Schwenkachse 14 mittig der Breite 9 des Förderelements 3 vorgesehen und befindet sich in einer Ebene gemeinsam mit der Mittelachse 16 längs des Förderelements 3. Der Rahmen 13 ist am stromaufwärts gelegenen Ende 11 des Förderelements 3 mit einem Verschwenkantrieb 15 bewegungsmäßig gekoppelt. Der Endabschnitt 11 des Förderelements 13 ist quer zu seiner Längsrichtung in Transportrichtung 7 verschwenkbar.

Zur Erfassung des Verlaufs des Teigstrangs 2 bzw. seiner Ränder 17 sind beidseitig des Förderbands 22 der Übergabevorrichtung 21 Breitensensoren 19 vorgesehen. Die Breitensensoren sind mit einer Steuereinheit 20 verbunden. Die Steuerleitungen zwischen den Breitensensoren 19 und der Steuereinheit 20 sind der besseren Übersicht wegen nicht dargestellt.

Abweichungen der Mittellage 18 des Teigstrangs 2 von der Mittellage 16 des Förderelements 3 werden von der Steuereinheit 20 durch Auswertung der Signale der Sensoren 19 erkannt und der Verschwenkantrieb 15 entsprechend angesteuert. Durch Auslenken bzw. Verschwenken des Förderelements 3 am stromaufwärts gelegenen Ende 11 aus seiner Mittellage 16 wird der Bahnverlauf des Teigstrangs 2 über die gesamte Länge 8 des Förderelements 3 bzw. über die Auflagelänge des Teigstrangs 2 auf dem Förderelement 3, das ist der Bereich vom Übergabeabschnitt 5 bis zum stromabwärts gelegenen Ende 12, schonend justiert.

Um eine Übergabe des Teigstrangs 2 von der Vorrichtung 1 an die nachfolgende Abgabevorrichtung 23 derart zu erreichen, dass die Mittellage 18 des Teigstrangs 2 deckungsgleich mit der Mittellage 16, also der Symmetrieachse in Längsrichtung des Förderelements 3 ist, muss die Übergabe des Teigstrangs 2 am stromaufwärtigen Ende 11 des Förderelements 3 mittig seiner Breite 9 bzw. symmetrisch in Bezug zur Mittellage 16 erfolgen.

Sensoren 19 zur Erfassung der Position von beiden Rändern 17 des Teigstrangs sind an der stromaufwärts der Vorrichtung 1 angeordneten Übergabevorrichtung 21 vorgesehen. Die Übergabevorrichtung 21, die ein Förderband 22 umfasst, kann wie in den beiden Fig. 1 und 2 gezeigt aus Platzgründen oberhalb des Förderelements 3 angeordnet sein. Die Transportrichtung 22' des Förderbands 22 ist hier entgegengesetzt zur Transportrichtung 7 des Förderelements 22.

Alternativ dazu kann eine Übergabevorrichtung 21 auch aufstromseitig des Förderelements 3 angeordnet sein. In diesem Fall weist die Transportrichtung 22' des Förderbands 22 in dieselbe Transportrichtung 7 wie das Förderelement 3. Diese Anordnung ist nicht dargestellt.

Zur Teigaufgabe 24 ist ein Teigvorportionierer 25 vorgesehen, der die erforderliche Teigmasse in einen Teigstrangformer 26 fördert.

Mehrere Mehlstreuer 27 sind in Fig. 1 vorgesehen, mit denen sowohl die Förderbänder 3 und 22, als auch eine oder beide Seiten des Teigstrangs 2 mit Mehl bestreut werden können. Am stromabwärts gelegenen Endabschnitt 12 des Förderelements 3 ist eine Teigwalze 28, umfassend eine obere Walze 29 sowie eine untere Walze 30, angeordnet. Die Drehrichtungen 29' der oberen Walze 29 sowie 30' der unteren Walze 30 sind gegenläufig zueinander.

Weiters ist in Fig. 1 ein Umlenkförderband 31 dargestellt, das in Transportrichtung 31' bewegt wird. Das Umlenkförderband 31 hat die Aufgabe, die Umlenkung des Teigstrangs 2 vom Förderband 22 der Übergabevorrichtung 21 auf das darunter liegende Förderelement 3 zu unterstützen. Durch das Umlenkförderband 31 wird gewährleistet, dass der Teigstrang 2 jeweils innerhalb des Übergabeabschnitts 5 auf die Auflagefläche 4 des Förderelements 3 gelegt wird.

Fig. 2 zeigt in einer schematischen Ansicht von oben das erfindungsgemäße Förderelement 3 während des Betriebs.

Zur Teigaufgabe 24 wird die zu verarbeitende Teigmasse beispielsweise als Teigblock von oben in den Teigvorportionierer 25 gefördert. Vom Teigvorportionierer 25 gelangt die Teigmasse in den anschließenden Teigstrangformer 26 und von dort weiter auf das Förderband 22 der Übergabevorrichtung 21. Breitensensoren 19 erfassen die Position der Ränder 17 des Teigstrangs 2, der beispielsweise außerhalb der Mittellage 16 des Förderelements 3 auf die Auflagefläche 4 gelegt werden würde. Daraufhin wird von der Steuereinheit 20 anhand der Signale der Sensoren 19 der Verschwenkantrieb 15 so geregelt, dass das Förderelement 3 um seine Schwenkachse 14 beispielsweise in Schwenkrichtung 15' quer zur Transportrichtung 7 bewegt wird, bis es eine ausgelenkte Lage 3' erreicht. Die Mittellage 16' des ausgelenkten Förderelements 3' ist somit schräg zur ursprünglichen Mittellage 16 gestellt. Der Teigstrang 2 trifft nun derart im Übergabeabschnitt 5 auf das darunterliegende, ausgelenkte Förderelement 3' auf, dass der Teigstrang 2 wieder mittig der Breite 9 des Förderelements 3 zu liegen kommt. Damit wird der Teigstrang 2 auch in mittiger Lage an die nachfolgende Abgabevorrichtung 23 übergeben. Ein unerwünschter seitlicher Versatz des Teigstrangs 2, beispielsweise durch eine schräge Auflage des Teigstrangs 2 auf dem Förderband 22 durch den Teigstrangfomer 26 bedingt, kann durch das verschwenkbare Förderelement 3 korrigiert werden.

Analog kann das Förderelement 3 mithilfe des Verschwenkantriebs 15 erforderlichenfalls auch in Schwenkrichtung 15" bewegt werden, bis beispielsweise eine ausgelenkte Lage 3" erreicht wird. Die Mittellage 16" des ausgelenkten Förderelements 3" ist somit schräg zur ursprünglichen Mittellage 16 gestellt. Der Teigstrang 2 trifft nun derart im

Übergabeabschnitt 5 auf das darunterliegende, ausgelenkte Förderelement 3" auf, dass der Teigstrang 2 wieder mittig der Breite 9 des Förderelements 3 zu liegen kommt. Der Teigstrang 2 wird somit wiederum in mittiger Lage an die nachfolgende Abgabevorrichtung 23 übergeben.

Durch entsprechendes Hin- und Herbewegen des Förderelements 3 in Schwenkrichtung 15' bzw. 15" wird erreicht, dass ein seitlicher Versatz des Teigstrangs 2 von seiner mittigen Lage justiert und der Teigstrang 2 immer mittig der Breite 9 des Förderelements 3 an die nachfolgenden Vorrichtungen übergeben wird. Am stromabwärtigen Ende 12 des Förderelements 3 fällt somit die Mittellage 18 des Teigstrangs 2 jeweils mit der Mittellage 16 des Förderelements 3 zusammen.

### Liste der Positionsnummern:

- 1: Vorrichtung
- 2: Teigstrang
- 3: Förderelement
- 3', 3": ausgelenkte Lagen des Förderelements 3
- 4: Auflagefläche des Förderelements 3
- 5: Abschnitt der Auflagefläche 4, Übergabeabschnitt
- 6: Antrieb des Förderelements 3
- 7: Transportrichtung des Förderelements 3
- 7': Transportrichtung des Teigstrangs 2
- 8: Länge des Förderelements 3
- 9: Breite des Förderelements 3
- 10: Breite des Teigstrangs 2
- 11: Stromaufwärts gelegenes Ende (Endabschnitt) des Förderelements 3
- 12: Stromabwärts gelegenes Ende (Endabschnitt) des Förderelements 3
- 13: Rahmen des Förderelements 3
- 14: Schwenkachse des Rahmens 13
- 15: Verschwenkantrieb
- 15', 15": Schwenkrichtung
- 16: Mittellage (in Längsrichtung) des Förderelements 3
- 16', 16": Mittellagen des verschwenkten Förderelements 3' bzw. 3"
- 17: Rand des Teigstrangs 2
- 18: Mittellage (in Längsrichtung) des Teigstrangs 2
- 19: Breitensensor; erfasst Rand 17
- 20: Steuereinheit
- 21: Übergabevorrichtung (die 1 vorhergehende Vorrichtung)
- 22: Förderband der Übergabevorrichtung 21
- 22': Förderrichtung des Förderbands 22
- 23: Abgabevorrichtung
- 24: Teigaufgabe
- 25: Teigvorportionierer
- 26: Teigstrangformer
- 27: Mehlstreuer
- 28: Teigwalze
- 29: Obere Walze
- 29': Drehrichtung der oberen Walze
- 30: Untere Walze
- 30': Drehrichtung der unteren Walze
- 31: Umlenkförderband
- 31': Drehrichtung des Umlenkförderbands 31

## Patentansprüche

1. Vorrichtung (1) zum kontinuierlichen Transport eines Teigstrangs (2), umfassend eine Übergabevorrichtung (21), vorzugsweise ein Förderband (22), zur Übergabe des Teigstrangs (2) in einem Übergabeabschnitt (5) an eine in Transportrichtung (7) bewegbare Auflagefläche (4) eines Förderelements (3), **dadurch gekennzeichnet, dass** das Förderelement (3) um eine Schwenkachse (14), die an seinem stromabwärtigen Endbereich (12) angeordnet ist, im Wesentlichen quer zur Transportrichtung (7) drehbar verschwenkbar ist.

2. Vorrichtung (1) nach Anspruch 1, **dadurch gekennzeichnet, dass** die Schwenkachse (14) des Förderelements (3) mittig seiner Breite (9) angeordnet ist.

3. Vorrichtung (1) nach Anspruch 1 oder 2, **dadurch gekennzeichnet, dass** die Schwenkachse (14) senkrecht zur Auflagefläche (4) des Förderelements (3) steht.

4. Vorrichtung (1) nach einem der vorigen Ansprüche, **dadurch gekennzeichnet, dass** das Förderelement (3) als Förderband ausgeführt ist.

5. Vorrichtung (1) nach einem der vorigen Ansprüche, **dadurch gekennzeichnet, dass** zum Verschwenken des Förderelements (3) ein Verschwenkantrieb (15) vorgesehen ist, der vorzugsweise am stromaufwärtigen Ende (11) des Förderelements (3) angeordnet ist.

6. Vorrichtung (1) nach Anspruch 5, **dadurch gekennzeichnet, dass** das stromaufwärtige Ende (11) des Förderelements (3) aus seiner Mittellage (16) beidseitig jeweils bis zu 25%, vorzugsweise jeweils bis zu 10% der Breite (10) des Teigstrangs (2) quer zur Transportrichtung (7) verschwenkbar ist.

7. Vorrichtung (1) nach Anspruch 1, **dadurch gekennzeichnet, dass** die Übergabevorrichtung (21) stromaufwärts des Förderelements (3) vorgesehen ist, wobei das Förderband (22) in Transportrichtung (7) des Förderelements (3) fördert.

8. Vorrichtung (1) nach Anspruch 1, **dadurch gekennzeichnet, dass** die Übergabevorrichtung (21) oberhalb des Förderelements (3) positioniert ist, wobei das Förderband (22) entgegen der Transportrichtung (7) des Förderelements (3) fördert.

9. Vorrichtung (1) nach einem der Ansprüche 5 bis 8, **gekennzeichnet durch** eine Steuereinheit (20) sowie Sensoren (19) zur Erfassung der Position von beiden Rändern (17) des Teigstrangs (2), wobei die Steuereinheit (20) anhand der Signale der Sensoren (19) den Verschwenkantrieb (15) so regelt, dass der Teigstrang (2) im Übergabeabschnitt (5) des Förderelements (3) mittig seiner Breite (9) aufgelegt wird.

10. Vorrichtung (1) nach Anspruch 9, **dadurch gekennzeichnet, dass** die Sensoren (19) an der Übergabevorrichtung (21) angeordnet sind.

11. Vorrichtung (1) nach Anspruch 9 oder 10, **dadurch gekennzeichnet, dass** die Sensoren (19) fotoelektrische Sensoren sind.

12. Vorrichtung (1) nach Anspruch 9 oder 10, **dadurch gekennzeichnet, dass** die Sensoren (19) Ultraschall-Sensoren sind.

## Claims

1. A device (1) for continuously transporting a dough strand (2), comprising a transfer device (21), preferably a conveyor belt (22), for transferring the dough strand (2) in a transfer section (5) onto a support surface (4) of a conveyor element (3), which support surface (4) is displaceable in the direction of transport (7), **characterized in that** the conveyor element (3) is pivotable substantially transversally to the direction of transport (7) about a swivelling axis (14) disposed at the downstream end region (12) thereof.

2. A device (1) according to claim 1, **characterized in that** the swivelling axis (14) of the conveyor element (3) is arranged centrally of the width (9) thereof.

3. A device (1) according to claim 1 or 2, **characterized in that** the swivelling axis (14) is orthogonal to the support surface (4) of the conveyor element (3).

4. A device (1) according to any of the preceding claims, **characterized in that** the conveyor element (3) is formed as a conveyor belt.

5. A device (1) according to any of the preceding claims, **characterized in that** there is provided a swivel drive (15) for swivelling the conveyor element (3), which is preferably arranged at the upstream end (11) of the conveyor element (3).

6. A device (1) according to claim 5, **characterized in that** the upstream end (11) of the conveyor element (3) is pivotable from its central position (16) to both sides by up to 25%, preferably by up to 10% of the width (10) of the dough strand (2) transversal to the direction of transport (7).

7. A device (1) according to claim 1, **characterized in that** the transfer device (21) is arranged upstream of the conveyor element (3), wherein the conveyor belt (22) feeds in the direction of transport (7) of the conveyor element (3).

8. A device (1) according to claim 1, **characterized in that** the transfer device (21) is situated above the conveyor element (3), wherein the conveyor belt (22) feeds in opposition to the direction of transport (7) of the conveyor element (3).

9. A device (1) according to any of claims 5 to 9, **characterized by** a control unit (20) as well as sensors (19) for detecting the position of both edges (17) of the dough strand (2), wherein the control unit (20) controls the swivel drive (15) by means of the signals of the sensors (19) in a way so that the dough strand (2) is positioned in the transfer section (5) of the conveyor element (3) centrally in the width (9) thereof.

10. A device (1) according to claim 9, **characterized in that** the sensors (19) are arranged at the transfer device (21).

11. A device (1) according to claim 9 or 10, **characterized in that** the sensors (19) are photoelectric sensors.

12. A device (1) according to claim 9 or 10, **characterized in that** the sensors (19) are ultrasound sensors.

## Revendications

1. Dispositif (1) pour le transport continu d'un boudin de pâte (2) comprenant un dispositif de remise (21), de préférence une bande de transport (22), pour la remise du boudin de pâte (2) dans une section de remise (5) sur une surface d'installation (4) mobile dans le sens de transport (7) d'un élément de transport (3), **caractérisé en ce que** l'élément de transport (3) peut être pivoté de manière rotative autour d'un axe de pivotement (14) qui est agencé sur sa zone d'extrémité en aval (12), sensiblement transversalement au sens de transport (7).

2. Dispositif (1) selon la revendication 1, **caractérisé en ce que** l'axe de pivotement (14) de l'élément de transport (3) est agencé au milieu de sa largeur (9).

3. Dispositif (1) selon la revendication 1 ou 2, **caractérisé en ce que** l'axe de pivotement (14) se trouve perpendiculairement à la surface d'installation (4) de l'élément de transport (3).

4. Dispositif (1) selon l'une quelconque des revendications précédentes, **caractérisé en ce que** l'élément de transport (3) est réalisé comme une bande de transport.

5. Dispositif (1) selon l'une quelconque des revendications précédentes, **caractérisé en ce qu'**un entraînement de pivotement (15) est prévu pour le pivotement de l'élément de transport (3), lequel est agencé de préférence sur l'extrémité en amont (11) de l'élément de transport (3).

6. Dispositif (1) selon la revendication 5, **caractérisé en ce que** l'extrémité en amont (11) de l'élément de transport (3) peut être pivotée de sa position médiane (16) de part et d'autre respectivement jusqu'à 25 %, de préférence respectivement jusqu'à 10 % de la largeur (10) du boudin de pâte (2) transversalement au sens de transport (7).

7. Dispositif (1) selon la revendication 1, **caractérisé en ce que** le dispositif de remise (21) est prévu en amont de l'élément de transport (3), la bande de transport (22) transportant dans le sens de transport (7) de l'élément de transport (3).

8. Dispositif (1) selon la revendication 1, **caractérisé en ce que** le dispositif de remise (21) est positionné au-dessus de l'élément de transport (3), la bande de transport (22) transportant dans le sens inverse au sens de transport (7) de l'élément de transport (3).

9. Dispositif (1) selon l'une quelconque des revendications 5 à 8, **caractérisé par** une unité de commande (20) ainsi que des capteurs (19) pour la détection de la position des deux bords (17) du boudin de pâte (2), l'unité de commande (20) régulant l'entraînement de pivotement (15) à l'aide des signaux des capteurs (19) de sorte que le boudin de pâte (2) soit placé dans la section de remise (5) de l'élément de transport (3) au milieu de sa largeur (9).

10. Dispositif (1) selon la revendication 9, **caractérisé en ce que** les capteurs (19) sont agencés sur le dispositif de remise (21).

11. Dispositif (1) selon la revendication 9 ou 10, **caractérisé en ce que** les capteurs (19) sont des capteurs photoélectriques.

12. Dispositif (1) selon la revendication 9 ou 10, **caractérisé en ce que** les capteurs (19) sont des capteurs à ultrasons.
